# EUROPÄISCHE PATENTSCHRIFT

(11) **EP 0 481 352 B1**
(45) Veröffentlichungstag und Bekanntmachung des Hinweises auf die Patenterteilung: **08.02.1995**
(21) Anmeldenummer: 91117258.3
(22) Anmeldetag: 10.10.1991
(51) Int. Cl.: A47J 47/14, B60H 1/00, B60N 3/16

(54) **Warmhalte- und Transportvorrichtung für Speisen**
Device for keeping warm and transporting food products
Dispositif pour tenir chaud et transporter des aliments

(30) Priorität: 13.10.1990 DE 9014240 U
(43) Veröffentlichungstag der Anmeldung: 22.04.1992
(73) Patentinhaber: PRIMUS GASTRONOMIE-BETRIEBS-GmbH, 55116 Mainz (DE)
(72) Erfinder: Sinemus, Kai, W-6500 Mainz (DE)
(74) Vertreter: Blumbach, Kramer & Partner

(56) Entgegenhaltungen:
- DE-B- 1 090 123
- GB-A- 2 200 094
- US-A- 2 319 422
- US-A- 2 397 836
- US-A- 3 721 803
- US-A- 3 942 426
- US-A- 4 806 736

## Beschreibung

Die Erfindung betrifft eine Vorrichtung zum Transportieren und Warmhalten von Speisen, insbesondere Pizzen, mit einem mit einer Heizung versehenen, wärmeisolierten Behälter.

Eine solche Transportvorrichtung ist beispielsweise bekannt aus der US-A-4 806 736.

Eine weitere Vorrichtung dieser Art ist bekannt aus der DE-U-8 906 818.

Diese Vorrichtung erfüllt ihren Zweck, hat aber den Nachteil, daß sie verhältnismäßig groß und umständlich in einem Kraftfahrzeug zu montieren ist. So ist es beispielsweise nicht möglich, die bekannte Warmhaltevorrichtung ohne große Vorbereitungen von einem Kraftfahrzeug in ein anderes umzusetzen. Außerdem stört der austretende Wasserdampf, der darüber hinaus zu Schäden und Sichtbehinderungen durch Niederschlag führen kann. Schließlich ist die bekannte Vorrichtung kaum tragbar, so daß die Speisen vor der Wohnung des Bestellers aus der Warmhaltevorrichtung herausgenommen werden müssen.

Der Erfindung liegt demgemäß die Aufgabe zugrunde, eine Warmhalte- und Transportvorrichtung für Speisen zu schaffen, die leicht tragbar ist und einen Transport bis zum Abnehmer ermöglicht, darüber hinaus die Speisen auf einer gewünschten Temperatur bei einer gewünschten Luftfeuchtigkeit hält, keine störenden Dämpfe abgibt und nur wenig Energie verbraucht.

Die Lösung der Aufgabe ist im Anspruch 1 gekennzeichnet.

Das als Funktionsteil ausgebildete Unterteil der Vorrichtung kann im Kraftfahrzeug verbleiben und gegebenenfalls dort auch fest installiert sein. Das Trageteil kann trotz einer guten Wärmeisolation verhältnismäßig leicht ausgebildet sein und daher bis zum Kunden mitgenommen werden. Bei aufgesetztem Oberteil findet ein geschlossener Luftaustausch über den Luft- und den Entfeuchtungskanal statt, so daß kein störender Wasserdampf entweicht.

Weiterbildungen der Erfindung sind Gegenstand der Unteransprüche. So kann vorgesehen sein, daß der Luft- und der Entfeuchtungskanal getrennte Eingänge besitzen und daß der Ausgang des Entfeuchtungskanals in den Luftkanal mündet. Dann sind nur drei Verbindungen zwischen dem Unter- und dem Oberteil nötig. Da beide Kanäle Gebläse enthalten, können die Ein- und Ausgänge verhältnismäßig kleine Öffnungen sein, so daß nach Abnahme des Trageteils auch dann keine größeren Warme- und Feuchtigkeitsverluste auftreten, wenn die bodenseitigen Öffnungen des Trageteils nicht besonders verschlossen werden.

Die Heizeinrichtung kann elektrisch ausgebildet sein und wird an das Bordnetz eines Kraftfahrzeuges angeschlossen. Natürlich kann gegebenenfalls auch eine Speisung aus dem Stromnetz erfolgen, beispielsweise mittels einer zusätzlichen Heizung oder durch Zwischenschaltung eines Netzteils. Alternativ kann die Heizeinrichtung auch mittels eines Wärmetauschers verwirklicht werden, der an den Kühlkreislauf eines Kraftfahrzeuges oder an den Heizkreislauf einer Standheizung anschließbar ist. Die Installation ist dann zwar schwieriger, das Bordnetz des Kraftfahrzeugs wird aber nicht belastet.

Damit auch bei einem längeren Transport die Qualität der Speisen nicht leidet, muß zum einen die jeweils richtige Temperatur gehalten werden, zum anderen ist es aber wichtig, daß auch die Luftfeuchtigkeit auf die Speisen abgestimmt ist. Insbesondere dürfen Pizzen weder austrocknen noch insbesondere auf der Unterseite zu naß werden. Die Erfindung sieht demgemäß in einer Weiterbildung vor, daß der Heizeinrichtung ein Thermostat zur Einstellung einer gewünschten Temperatur im Trageteil und dem Entfeuchtungskanal ein Hygrostat zur Einstellung einer gewünschten Luftfeuchtigkeit im Trageteil zugeordnet ist. Bei einer elektrischen Heizeinrichtung kann der Thermostat in bekannter Weise die Heizeinrichtung bei Erreichen der gewünschten Temperatur abschalten und bei Unterschreiten dieser Temperatur wieder einschalten, so daß insgesamt die Temperatur gehalten wird. Bei Verwendung eines Wärmetauschers kann entweder die Zufuhr der Wärme durch Klappen oder Ventile geregelt oder auch das Gebläse im Luftkanal ein- und ausgeschaltet werden. Die Einstellung der Feuchtigkeit erfolgt zweckmäßig dadurch, daß der Hygrostat das Gebläse des Entfeuchtungskanals ein- und ausschaltet. Alternativ können auch Klappen zur Umgehung der Entfeuchtungskammer Verwendung finden.

Die Entfeuchtungskammer enthält zweckmäßig einen luftdurchlässigen Beutel, der mit einer hygroskopischen Substanz, beispielsweise Kalziumchlorid (CaCl) gefüllt ist. Der Beutel liegt auf einem Abtropfgitter mit einer darunter angeordneten Abtropfschale. Diese kann mit einer flüssigkeitsbindenden Substanz versehen werden, die zweckmäßig in einem Beutel oder Kissen aufgenommen ist.

Das Unterteil weist mit Vorteil einen Schalter auf, der beim Abheben des Trageteils die elektrischen Verbraucher im Unterteil abschaltet, also eine elektrische Heizung, die Gebläse und gegebenenfalls Regeleinrichtungen.

Das Trageteil besitzt mit Vorteil einen Klappdeckel und weist eine Haltevorrichtung für die zu transportierenden Speisen auf, beispielsweise Einschiebegitter.

Unter Umständen kann man auch auf die Vorteile einer Trennung in ein Ober- und ein Unterteil verzichten und entweder die beiden Teile fest miteinander verbinden oder auch einstückig herstellen.

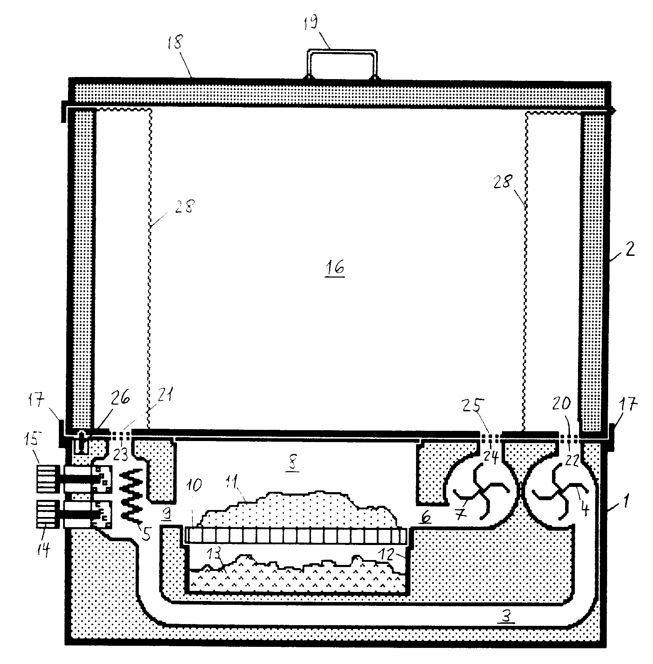

Nachfolgend wird ein Ausführungsbeispiel der Erfindung anhand der Zeichnung beschrieben, die schematisch eine Warmehalte- und Transportverbindung im Schnitt zeigt.

Die Vorrichtung besteht aus einem Unter- oder Funktionsteil 1 und einem abnehmbaren Ober- oder Trageteil 2. Das Unterteil 1 weist einen Luftkanal 3 mit einem Gebläse 4 und einer elektrischen Heizung 5 auf. Ein Entfeuchtungskanal 6 enthält eingangsseitig ebenfalls ein Gebläse 7 und führt in eine Entfeuchtungskammer 8. Der Ausgang 9 der Entfeuchtungskammer mündet im Bereich der Heizung 5 in den Luftkanal 3. In der Entfeuchtungskammer 8 ist ein herausnehmbares Abtropfgitter 10 angeordnet, auf dem ein Netzbeutel 11 mit einer Füllung aus einer hygroskopischen Substanz (CaCl) liegt. Unterhalb des Abtropfgitters 10 befindet sich eine ebenfalls entnehmbare Abtropfschale 12 die mit einer saugfähigen Substanz 13 gefüllt ist. Im einfachsten Fall kann beispielsweise Sägemehl in einem Beutel verwendet werden.

Zur Regelung der Temperatur und Luftfeuchtigkeit sind ein Thermostat 14 und ein Hygrostat 15 vorgesehen. Der Thermostat regelt in bekannter und daher nicht im einzelnen dargestellten Weise die Heizung 5 so, daß eine gewünschte Temperatur, beispielsweise 80°C für Pizzen im Warmhalteraum 16 des Trageteils 2 gehalten wird. Entsprechend beeinflußt der Hygrostat 15 die Feuchtigkeit im Warmhalteraum durch Ein- und Ausschalten des Gebläses 7 so, daß eine gewünschte Luftfeuchtigkeit von bespielsweise 50% erzielt wird.

Das Trageteil 2 ist auf dem Funktionsteil 1 durch einen umlaufenden Rand 17 gehalten und kann leicht für den Transport der Speisen zum Kunden abgenommen werden. Dazu ist ein verriegelbarer Klappdeckel 18 mit einem Tragegriff 19 vorgesehen. Im inneren des Trageteils 2, also im Warmhalteraum 16 befindet sich eine nur schematisch dargestellte Haltevorrichtung 28 für die zu transportierenden Speisen. Die Luftumwälzung und gleichzeitig Lufterwärmung erfolgt über den Kanal 3 mit dem Gebläse 4 und der Heizung 5. Dazu weist der Boden des Trageteils 2 Öffnungen 20, 21 auf, die mit dem Eingang 22 bzw. Ausgang 23 des Luftkanals 3 abdichtend fluchten. Der Entfeuchtungskanal steht auf entsprechende Weise über seinen Eingang 24 mit einer Bodenöffnung 25 des Trageteils 2 In Verbindung. Die Verbindungen zu den Kanälen werden daher automatisch beim Aufsetzen des Trageteils 2 auf das Funktionsteil 1 hergestellt und auch wieder getrennt. Beim Abnehmen des Trageteils sorgt ein nur schematisch dargestellter Schalter 26 für die elektrische Abschaltung des Funktionsteils 1, also der Heizung 5 und der Gebläse 4, 7.

Sowohl das Trageteil 2 mit Klappdeckel 18 als auch die Luft führenden Kanäle und Kammern im Funktionsteil 1 sind thermisch mit beispielsweise geschäumtem Polystyrol ("Styropor", "Styrodur") so gut isoliert, daß nur eine verhältnismäßig kleine Heizleistung von beispielsweise etwa 120 W erforderlich sind. Eine solche Leistung von 10 A bei 12 V kann noch ohne Schwierigkeiten zusätzlich dem Bordnetz eines normalen Kraftfahrzeuges entnommen werden.

Es kann vorgesehen sein, daß beispielsweise für den Transport von Pizzen ein Funktionsteil in der Pizzaküche und ein weiteres Funktionsteil im Transportfahrzeug stehen. Die jeweils bestellten Pizzen können dann jeweils in eines von mehreren Trageteilen bereits vor dem Transport gelagert werden, so daß keine Verzögerungen auftreten.

## Patentansprüche

1. Vorrichtung zum Transportieren und Warmhalten von Speisen, insbesondere Pizzen, mit einem eine Heizung (5) enthaltenden, wärmeisolierenden Behälter (1, 2),
dadurch gekennzeichnet,
daß der Behälter ein Unterteil (1) und ein darauf aufsetzbares Oberteil (2) aufweist,
daß das Unterteil (1) als Funktionsteil ausgebildet ist und einen ein Gebläse (4) sowie eine Heizvorrichtung (5) enthaltenden Luftkanal (3) und einen eine Entfeuchtungskammer (8) sowie ein Gebläse (7) enhaltenden Entfenchtungskanal (6) aufweist,
daß der jeweilige Eingang (22, 24) des Luft- und des Entfeuchtungskanals (3, 6) auf der Oberseite des Funktionsteils (1) mündet, und
daß das Oberteil (2) die Speisen enthält und als Trageteil ausgebildet ist sowie im Boden Öffnungen (20, 21, 25) aufweist, die beim Aufsetzen auf das Unterteil (1) mit dem jeweiligen Eingang (22, 24) und dem Ausgang (23) des Luft- und des Entfeuchtungskanals (3, 6) fluchten.

2. Vorrichtung nach Anspruch 1,
dadurch gekennzeichnet, daß der Luft- und der Entfeuchtungskanal (3, 6) getrennte Eingänge (22, 24) besitzen, und daß der Ausgang (9) des Entfeuchtungskanals (6) in den Luftkanal (3) mündet.

3. Vorrichtung nach Anspruch 1 oder 2,
dadurch gekennzeichnet, daß die Heizeinrichtung (5) elektrisch ausgebildet und an das Bordnetz eines Kraftfahrzeuges anschließbar ist.

4. Vorrichtung nach Anspruch 1 oder 2,
dadurch gekennzeichnet, daß die Heizeinrichtung einen Wärmetauscher aufweist, der an den Kühlkreislauf eines Kraftfahrzeuges oder an den Heizkreislauf einer Standheizung anschließbar ist.

5. Vorrichtung nach einem der Ansprüche 1 bis 4,
dadurch gekennzeichnet, daß die Heizeinrichtung (5) ein Thermostat (14) zur Einstellung einer gewünschten Temperatur im Trageteil (2) besitzt.

6. Vorrichtung nach einem der Ansprüche 1 bis 5,
dadurch gekennzeichnet, daß dem Entfeuchtungskanal (6) ein Hygrostat (15) zur Einstellung einer gewünschten Luftfeuchtigkeit im Trageteil (2) zugeordnet ist.

7. Vorrichtung nach einem der Ansprüche 1 bis 6,
dadurch gekennzeichnet, daß die Entfeuchtungskammer (8) einen mit einer hygroskopischen Substanz gefüllten Beutel (11) enthält, der auf einem Abtropfgitter (10) mit einer darunter angeordneten Abtropfschale (12) liegt.

8. Vorrichtung nach Anspruch 7,
dadurch gekennzeichnet, daß die Abtropfschale (12) mit einem mit einer flüssigkeitsbindenden Substanz versehenen Kissen (13) versehen ist.

9. Vorrichtung nach einem der Ansprüche 1 bis 8,
dadurch gekennzeichnet, daß das Unterteil (1) mit einem Schalter (26) versehen ist, der beim Abheben des Trageteils (2) die elektrischen Verbraucher (4, 5, 7) im Unterteil (1) abschaltet.

10. Vorrichtung nach einem der Ansprüche 1 bis 9,
dadurch gekennzeichnet, daß das Trageteil (2) mit einem Klappdeckel (18) und einer Haltevorrichtung (28) für die zu transportierenden Speisen versehen ist.

## Claims

1. A device for transporting and keeping food, more particularly pizzas, hot, comprising a thermally insulated container (1, 2) containing a heater (5), characterised in that the container comprises a bottom part (1) and a top part (2) adapted to be fitted thereon,
in that the bottom part (1) is constructed as a functional part and comprises an air duct (3) containing a fan (4) and a heater (5), and a dehumidifying duct (6) containing a dehumidifying chamber (8) and a fan (7),
in that the respective inlets (22, 24) to the air and dehumidifying ducts (3, 6 respectively) discharge at the top of the functional part (1) and
in that the top part (2) contains the food and is constructed as a carrier element and the base is formed with openings (20, 21, 25) which, when the top part is fitted on to the bottom part (1), are in line with the respective inlets (22, 24) and the outlet (23) of the air and dehumidifying ducts (3, 6).

2. A device according to claim 1, characterised in that the air and dehumidifying ducts (3, 6) have separate inlets (22, 24) and in that the outlet (9) of the dehumidifying duct (6) leads into the air duct (3).

3. A device according to claim 1 or 2, characterised in that the heater (5) is an electric heater and is adapted to be connected to the electric power supply on a motor vehicle.

4. A device according to claim 1 or 2, characterised in that the heater comprises a heat-exchanger which is adapted to be connected to the cooling circuit of a motor vehicle or to the heating circuit of a floor-mounted heater.

5. A device according to any one of claims 1 to 4, characterised in that the heater (5) comprises a thermostat (14) for adjusting a required temperature in the carrier element (2).

6. A device according to any one of claims 1 to 5, characterised in that the dehumidifying duct (6) has an associated hygrostat (15) for adjusting a required air humidity in the carrier element (2).

7. A device according to any one of claims 1 to 6, characterised in that the dehumidifying chamber (8) contains a bag (11) filled with a hygroscopic substance, the bag (11) resting on a drip grid (10) with a drip tray (12) therebeneath.

8. A device according to claim 7, characterised in that the drip tray (12) is provided with a pad (13) provided with a liquid-binding substance.

9. A device according to any one of claims 1 to 8, characterised in that the bottom part (1) is provided with a switch (26) which, when the carrier element (2) is lifted, disconnects the electrical loads (4, 5, 7) in the bottom part (1).

10. A device according to any one of claims 1 to 9, characterised in that the carrier element (2) has a hinged lid (18) and a holder (28) for the food for transportation.

## Revendications

1. Dispositif pour le transport et le maintien au chaud d'aliments, en particulier de pizzas, avec un récipient (1, 2) isolant à la chaleur, contenant un chauffage (5),
caractérisé en ce que
le récipient présente une partie inférieure (1) et une partie supérieure (2) posable sur celle-ci,
la partie inférieure (1) est constituée comme une partie fonctionnelle, et présente un canal pour l'air (3), contenant une soufflante (4) ainsi qu'un dispositif de chauffage (5), et un canal de déshumidification (6), contenant une chambre de déshumidification (8) ainsi qu'une soufflante (7),
chaque fois, l'entrée (22) du canal pour l'air (3) et l'entrée (24) du canal de déshumidification (6) débouchent sur le côté supérieur de la partie fonctionnelle (1),
et en ce que la partie supérieure (2), qui contient des aliments et est constituée comme partie de port, présente aussi, dans le fond, des ouvertures (20, 21, 25) qui, lors de la pose sur la partie inférieure (1), s'alignent respectivement avec l'entrée (22) du canal pour l'air (3), l'entrée (24) du canal de déshumidification (6) et la sortie (23) commune à ces deux canaux.

2. Dispositif selon la revendication 1, caractérisé en ce que le canal pour l'air (3) et le canal de déshumidification (6) possèdent des entrées (22, 24) séparées, et que la sortie (9) du canal de déshumidification (6) débouche dans le canal pour l'air (3).

3. Dispositif selon la revendication 1 ou la revendication 2, caractérisé en ce que l'agencement de chauffage (5) est constitué électrique et est susceptible d'être raccordé au réseau de bord d'un véhicule automobile.

4. Dispositif selon la revendication 1 ou la revendication 2, caractérisé en ce que l'agencement de chauffage présente un échangeur de chaleur, qui est susceptible d'être raccordé au circuit de refroidissement d'un véhicule automobile ou au circuit de chauffage d'un chauffage fixe.

5. Dispositif selon une des revendications 1 à 4, caractérisé en ce que l'agencement de chauffage (5) possède un thermostat (14) pour l'ajustement d'une température souhaitée dans la partie de port (2).

6. Dispositif selon une des revendications 1 à 5, caractérisé en ce qu'au canal de déshumidification (6) est associé un hygrostat (15) pour l'ajustement d'une humidité d'air souhaitée dans la partie de port (2).

7. Dispositif selon une des revendications 1 à 6, caractérisé en ce que la chambre de déshumidification (8) contient un petit sac (11) rempli avec une substance hygroscopique, qui repose sur une grille d'égouttage (10), avec une cuvette d'égouttage (12) agencée sous celle-ci.

8. Dispositif selon la revendication 7, caractérisé en ce que la cuvette d'égouttage (12) est pourvue d'un coussin (13) pourvu d'une substance fixant les liquides.

9. Dispositif selon une des revendications 1 à 8, caractérisé en ce que la partie inférieure (1) est pourvue d'un interrupteur (26), qui, lors du soulèvement de la partie de port (2), met hors services les consommateurs (4, 5, 7) électriques dans la partie inférieure (1).

10. Dispositif selon une des revendications 1 à 9, caractérisé en ce que la partie de port (2) est pourvue d'un couvercle basculant (18) et d'un dispositif de maintien (28) pour les aliments à transporter.
